# EUROPÄISCHE PATENTANMELDUNG

(11) **EP 1 237 061 A1**
(43) Veröffentlichungstag der Anmeldung: **04.09.2002**
(21) Anmeldenummer: 01105184.4
(22) Anmeldetag: 02.03.2001
(51) Int. Cl.: G05B 19/43

(54) **Verfahren und Einrichtung zur Fernsteuerung einer Mehrzahl von einzeln ansteuerbaren Aktoren**

(71) Anmelder: Schmidt, Thomas, Dipl-Ing., 63697 Hirzenhain (DE)
(72) Erfinder: Schmidt, Thomas, Dipl-Ing., 63697 Hirzenhain (DE)
(74) Vertreter: Haar, Lucas H., Dipl.-Ing.

(57) **Zusammenfassung**

Bei einem Verfahren zur Fernsteuerung einer Mehrzahl von einzeln ansteuerbaren Aktoren durch Übertragung von den einzelnen Aktoren zugeordneten Drucksignalen mit Hilfe eines gasförmigen oder flüssigen Druckmittels in als Schlauch- oder Rohrleitungen ausgebildeten Übertragungsleitungen ist vorgesehen, daß die Drucksignale den einzelnen Aktoren numerisch zugeordnet werden und ihre Zuordnung in binär codierter Form übertragen wird, indem je nach Ordnungszahl eines angesteuerten Aktors gleichzeitig zwei oder mehrere Übertragungsleitungen die numerische Zuordnung und die Steuerung des Aktors bestimmende Drucksignale übertragen. Den Aktoren ist eine Decodiereinrichtung zugeordnet, die die ankommenden, binär codierten Drucksignale entschlüsselt und die steuernden Drucksignale dem angesteuerten Aktor zuleitet. Es wird weiterhin eine Vorrichtung zur Durchführung dieses Verfahrens beschrieben.

## Beschreibung

Die Erfindung betrifft ein Verfahren und eine Einrichtung zur Fernsteuerung einer Mehrzahl von einzeln ansteuerbaren Aktoren durch Übertragung von den einzelnen Aktoren zugeordneten Drucksignalen mit Hilfe eines gasförmigen oder flüssigen Druckmittels in als Schlauch- oder Rohrleitungen ausgebildeten Übertragungsleitungen.

Fernsteuereinrichtungen für gasförmige oder flüssige Druckmittel werden beispielsweise angewendet um Anforderungen an Explosionssicherheit zu erfüllen oder eine hohe Leistungsdichte zu erreichen. Ein Nachteil derartiger Steuerungen wird vielfach in dem vergleichsweise hohen Aufwand an Leitungen gesehen, die zur Übertragung der Drucksignale an die zu steuernden Verbraucher benötigt werden. So führt beispielsweise bei einer bekannten pneumatischen Steuereinrichtung zur Steuerung des Farbwechsels einer automatisch arbeitenden Lackieranlage zu jedem der bis zu 64 im explosionsgeschützten Bereich befindlichen, pneumatisch gesteuerten Farbwechselventile eine separate Leitung von mehreren Metern Länge.

Aus DE 29 12 639 C2 ist eine programmierbare pneumatische Steuerungseinrichtung bekannt, bei der 3/2-Wegeventile in Matrixform angeordnet und zeilenweise mittels einer Leitung verbunden sind, wobei das eine Ende der Leitung mit einer Fluidquelle verbunden ist und das andere Ende den Ausgang darstellt. Hierbei können die Wegeventile durch die Werte von Eingangssignalen und durch Programmierung, die mittels mechanischer Vorgabe bewirkt wird, eine von zwei möglichen Schaltstellungen einnehmen, so daß in jeder Zeile der Matrix eine programmierbare UND-Verknüpfung ausführbar ist.

Der Erfindung liegt die Aufgabe zugrunde, ein Verfahren und eine Einrichtung der eingangs genannten Art anzugeben, welches eine Verringerung der Zahl der erforderlichen Übertragungsleitungen und damit des Bau- und Montageaufwands für die Herstellung einer pneumatischen oder hydraulischen Fernsteuereinrichtung ermöglicht.

Erfindungsgemäß wird diese Aufgabe dadurch gelöst, daß die Drucksignale den einzelnen Aktoren numerisch zugeordnet werden und ihre Zuordnung in binär codierter Form übertragen wird, indem je nach Ordnungszahl eines angesteuerten Aktors gleichzeitig zwei oder mehrere Übertragungsleitungen die numerische Zuordnung und die Steuerung des Aktors bestimmende Drucksignale übertragen und daß den Aktoren eine Decodiereinrichtung zugeordnet ist, die die ankommenden, binär codierten Drucksignale entschlüsselt und die steuernden Drucksignale dem angesteuerten Aktor zuleitet.

Mit dem erfindungsgemäßen Verfahren kann die Zahl der benötigten Übertragungsleitungen bei einer pneumatischen oder hydraulischen Fernsteuerung erheblich reduziert werden. So sind beispielsweise zur Fernsteuerung von 16 Aktoren nur fünf Übertragungsleitungen im Gegensatz zu 16 bei herkömmlichen Anlagen erforderlich. Von den fünf Übertragungsleitungen dienen vier zur Übertragung des binär codierten Zuordnungssignals und eine der Übertragung des Steuersignals. Erhöht man die Zahl der Übertragungsleitungen auf sieben, so lassen sich damit 64 Aktoren steuern.

Ein weiteres Ziel der Erfindung ist die Schaffung einer zur Durchführung des erfindungsgemäßen Verfahrens besonders geeigneten Steuereinrichtung für gasförmige oder flüssige Druckmittel, die durch Ansteuerung mit einem binär codierten Drucksignal eine Verbindung zwischen einem Eingang und einem bestimmten, durch das Drucksignal bezeichneten Ausgang einer Mehrzahl von Ausgängen herstellt.

Die Erfindung sieht hierzu eine Steuereinrichtung vor mit wenigstens zwei zwischen einem Eingang und mehreren Ausgängen angeordneten Gruppen von druckgesteuerten Ventilen, die zwei Schaltstellungen einnehmen können und in jeder der beiden möglichen Schaltstellungen einen anderen von zwei Ventilausgängen mit einem Ventileingang verbinden, wobei die Ventilausgänge der Ventile einer ersten Gruppe jeweils an einen Ventileingang eines gesonderten Ventils einer zweiten Gruppe von Ventilen angeschlossen sind, die Ventile jeder Gruppe jeweils über eine gemeinsame Steuerleitung zur Übertragung von Drucksignalen ansteuerbar sind und die Steuerleitung der einzelnen Gruppen voneinander getrennt sind.

Mit der erfindungsgemäßen Steuereinrichtung lassen sich auf einfache Weise und mit geringem Bauaufwand eine vergleichsweise große Zahl von Aktoren pneumatisch oder hydraulisch steuern. Für die binär codierte Signalübertragung sind nur wenige Leitungen erforderlich und die Steuereinrichtung kann mit einfachen Wegeventilen üblicher Bauweise gebildet werden. Wird die Steuerung beispielsweise aus 3/2-, 4/2-oder 5/2-Wegeventilen aufgebaut, so ist die erforderliche Ventilzahl jeweils um eins kleiner als die Zahl der zu steuernden Ausgänge und damit auch kleiner als die Zahl der bei herkömmlicher direkter Ansteuerung der einzelnen Verbraucher benötigten Pilotventile. Anstelle der vorgenannten Wegeventile können zum Aufbau der erfindungsgemäßen Steuereinrichtung komplexere Wegeventile verwendet werden, die die Funktion von zwei oder mehreren Ventilen einer Gruppe in sich vereinigen.

Zur Erzeugung der binär codierten pneumatischen oder hydraulischen Steuersignale kann nach einem weiteren Vorschlag der Erfindung den Steuerleitungen ein Wandler vorgeschaltet sein, der binär codierte elektrische Ausgangssignale in entsprechende pneumatische oder hydraulische Signale umwandelt. Ein derartiger Wandler kann aus mehreren elektromagnetisch betätigbaren Wegeventilen gebildet sein, die unabhängig voneinander ansteuerbar sind und jeweils eine Steuerleitung mit einer Druckquelle oder einem unter Atmosphärendruck stehenden Raum verbinden.

Liegen die Eingangssignale nicht in binär codierter Form, sondern als numerisch geordnete Einzelsignale vor, so kann den Steuerleitungen der Steuereinrichtung erfindungsgemäß eine pneumatische oder hydraulische Binärcodiereinrichtung vorgeschaltet sein, die eine Anzahl numerisch geordneten Signaleingängen aufgegebene Drucksignale in binär codierte Drucksignale an mit den Steuerleitungen verbundenen Ausgängen umwandelt. Eine vorteilhafte Ausgestaltung der Binärcodiereinrichtung weist erfindungsgemäß eine numerisch geordnete Zahl von Signaleingängen auf, von denen die Signaleingänge, deren Ordnungszahl 1 oder eine ganzzahlige Potenz der Basis 2 ist, jeweils durch eine Leitung mit einem Signalausgang verbunden sind und wobei die übrigen Signaleingänge jeweils über Rückschlagventile an diejenigen der Verbindungsleitungen angeschlossen sind, deren Ordnungszahlen in der Summe die Ordnungszahl des jeweils angeschlossenen Signaleingangs ergeben.

Nach einem weiteren Vorschlag der Erfindung kann die Einrichtung zur Decodierung des binären, die Zuordnung bestimmenden Drucksignals in die Aktoren integriert sein, so daß eine direkte Ansteuerung der Aktoren mit codierten Drucksignalen möglich ist. Eine vorteilhafte Ausgestaltung eines derartigen Aktors weist eine durch Beaufschlagung mit einem gasförmigen oder flüssigen Druckmittel bewegbare Wand auf, die eine an eine übertragungsleitung zur Fernsteuerung anschließbare Kammer begrenzt, wobei die bewegbare Wand durch zwei oder mehrere Sperren in einer Stellung festhaltbar ist und die Sperren unabhängig voneinander durch Beaufschlagung mit einem Druckmittel in eine Sperrstellung, in der sie die bewegbare Wand festhalten, oder in eine Lösestellung steuerbar sind, in der sie die bewegbare Wand freigeben. Bei dem erfindungsgemäßen Aktor iäßt sich die bewegbare Wand, zum Beispiel zur Betätigung eines Ventils, nur dann bewegen, wenn sich alle Sperren in der Lösestellung befinden. Die Sperren können unterschiedlich ausgelegt sein, nämlich bei Druck entweder die Sperrstellung oder die Lösestellung einnehmen, so daß sich bei n Sperren 2ⁿ Übertragungsmöglichkeiten ergeben, d.h. es können mit n + 1 Übertragungsleitungen 2ⁿ Aktoren einzeln angesteuert werden. Zur Betätigung des Aktors können anstelle hydraulischer oder pneumatischer Mittel auch elektromagnetische oder mechanische Mittel vorgesehen sein, die durch die Sperren verriegelbar sind.

Die Erfindung wird nachfolgend anhand von Ausführungsbeispielen näher erläutert, die in der Zeichnung dargestellt sind. Es zeigen
- Figur 1: ein Schaltschema einer aus 5/2-Wegeventilen aufgebauten Steuereinrichtung zur Decodierung von Drucksignalen,
- Figur 2: ein Schaltschema einer pneumatischen Einrichtung zur Binärcodierung numerisch geordneter Drucksignale,
- Figur 3: einen Querschnitt durch ein pneumatisch steuerbares 2/2-Wegeventil mit einem über binär codierte Drucksignale ansteuerbaren Aktor,
- Figur 4: einen Querschnitt durch eine bei Druckbeaufschlagung in die Lösestellung bewegbare Sperre für einen Aktor gemäß Figur 3,
- Figur 5: einen Querschnitt durch eine bei Druckbeaufschlagung in die Sperrstellung bewegbare Sperre für einen Aktor gemäß Figur 3,
- Figur 6: eine schematische Gegenüberstellung einer bekannten und einer erfindungsgemäßen elektro-pneumatischen Steuereinrichtung zur Steuerung eines Farbwechslers mit 64 Ventilen und
- Figur 7: eine schematische Darstellung einer anderen Ausführungsform einer erfindungsgemäßen elektropneumatischen Steuereinrichtung zur Steuerung eines Farbwechslers mit 64 direkt über binär codierte Drucksignale ansteuerbaren Ventilen.

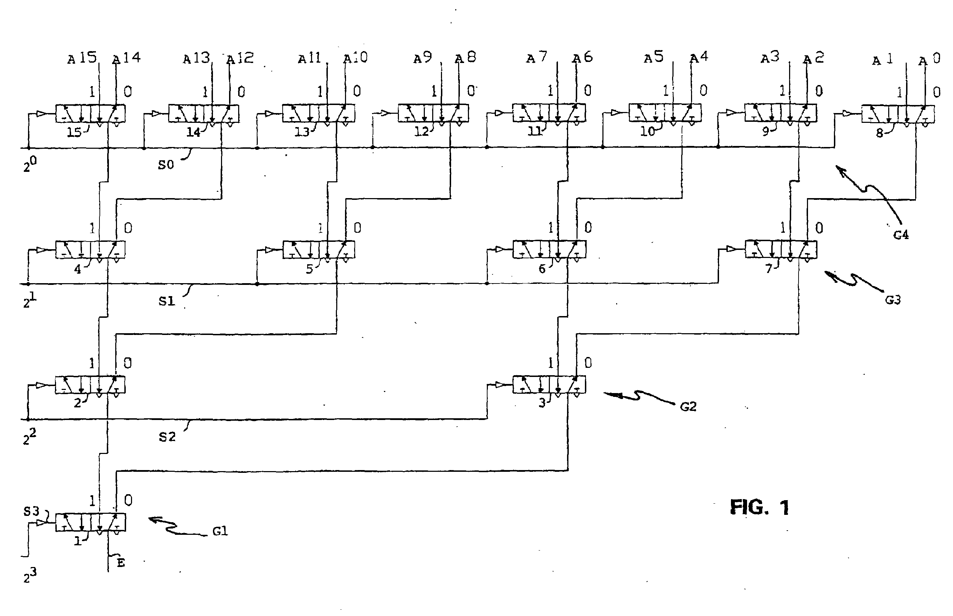

Figur 1 zeigt eine pneumatische Steuereinrichtung zur Decodierung binär codierter Drucksignale. Die Steuereinrichtung besteht aus pneumatisch steuerbaren 5/2-Wegeventilen 1-15, die in vier Gruppen G1, G2, G3, G4 gegliedert sind: In der Gruppe G1 ist ein Wegeventil, in der Gruppe G2 sind zwei, in der Gruppe G3 vier und in der Gruppe G4 acht Wegeventile angeordnet. Die Wegeventile 1-15 haben jeweils einen Eingang und zwei Ausgänge für die Arbeitsluft und beiderseits des Eingangs einen Atmosphärenanschluß. An die beiden Ausgänge eines Wegeventils einer Gruppe sind jeweils voneinander getrennt die Eingänge zweier Wegeventile der nächst höheren Gruppe angeschlossen. Als freie Anschlüsse der Steuereinrichtung verbleiben somit für die Arbeitsluft der Eingang E am Wegeventil 1 und die Ausgänge A0-A15 der Wegeventile 8-15. Die Steuerung der Wegeventile 1-15 erfolgt über vier Steuerleitungen S0-S3, wobei jeder Gruppe G1-G4 jeweils eine Steuerleitung zugeordnet ist, an die alle Ventile der jeweiligen Gruppe angeschlossen sind, so beispielsweise die Wegeventile 4-7 der Gruppe G3 gemeinsam an die Steuerleitung S1.

Durch den beschriebenen Aufbau der Steuereinrichtung gemäß Figur 1 kann der Eingang E für die Zuführung von Arbeitsluft jeweils mit demjenigen der Ausgänge A0-A15 verbunden werden, der durch das den Steuerleitungen S0-S3 aufgegebene binär codierte Drucksignal bezeichnet ist.

Die Steuerleitungen S0-S3 können entweder mit Atmosphärendruck entsprechend dem Signalwert 0 oder mit einem höheren zur Umsteuerung der Wegeventile 1-15 geeigneten Druck entsprechend dem Signalwert 1 beaufschlagt werden. Liegt an den Steuerleitungen S0-S3 der Signalwert 0 an, so befinden sich die Wegeventile 1-15 in der in Figur 1 gezeigten ersten Stellung. In dieser Stellung ist der Eingang E entsprechend dem anliegenden Drucksignal 0 mit dem Ausgang A0 verbunden.Durch Beaufschlagung der Steuerleitungen S0-S3 mit dem Signalwert 1 werden die Wegeventile 1-15 in ihre zweite Stellung umgesteuert. Bei der binär codierten Signalübertragung entspricht ein Drucksignal mit Signalwert 1 bei der Steuerleitung S3 dem Zahlenwert 2³, bei der Steuerleitung S2 dem Zahlenwert 2², bei der Steuerleitung S1 dem Zahlenwert 2¹ und bei der Steuerleitung S0 dem Zahlenwert 2⁰. Diese Zahlenwerte bezeichnen jeweils die Nummer des Ausgangs, der durch Beaufschlagung einer der Steuerleitungen S0-S3 mit einem Druck entsprechend dem Signalwert 1 mit dem Eingang E verbunden wird. Die Steuerleitung S3 schaltet somit den Ausgang A8, die Steuerleitung S2 den Ausgang A4, Steuerleitung S1 den Ausgang A2 und die Steuerleitung S0 den Ausgang A1. Werden zwei oder mehrere Steuerleitungen mit dem Signalwert 1 angesteuert, so werden die Zahlenwerte der angesteuerten Steuerleitungen addiert. Um beispielsweise den Ausgang A11 mit dem Eingang E zu verbinden, müssen die Steuerleitungen S3, S1 und S0 mit dem Signalwert 1 angesteuert werden. Liegt an keiner Steuerleitung ein Signalwert 1 an, so wird der Ausgang A0 mit dem Eingang E verbunden. Die beschriebene Steuereinrichtung ermöglicht somit die Ansteuerung von 16 Ausgängen über lediglich 5 Übertragungsleitungen, die zu dem Eingang E und zu den Steuerleitungen S0-S3 führen. Durch Hinzufügung einer weiteren an die Ausgänge A0-A15 angeschlossenen Gruppe von 16 Wegeventilen ist es mit nur einer zusätzlichen Übertragungsleitung möglich, 32 Ausgänge anzusteuern. Entsprechend kann durch Erweiterung der Steuereinrichtung um jeweils eine Gruppe und eine Übertragungsleitung die Anzahl der zu steuernden Ausgänge jeweils verdoppelt werden.

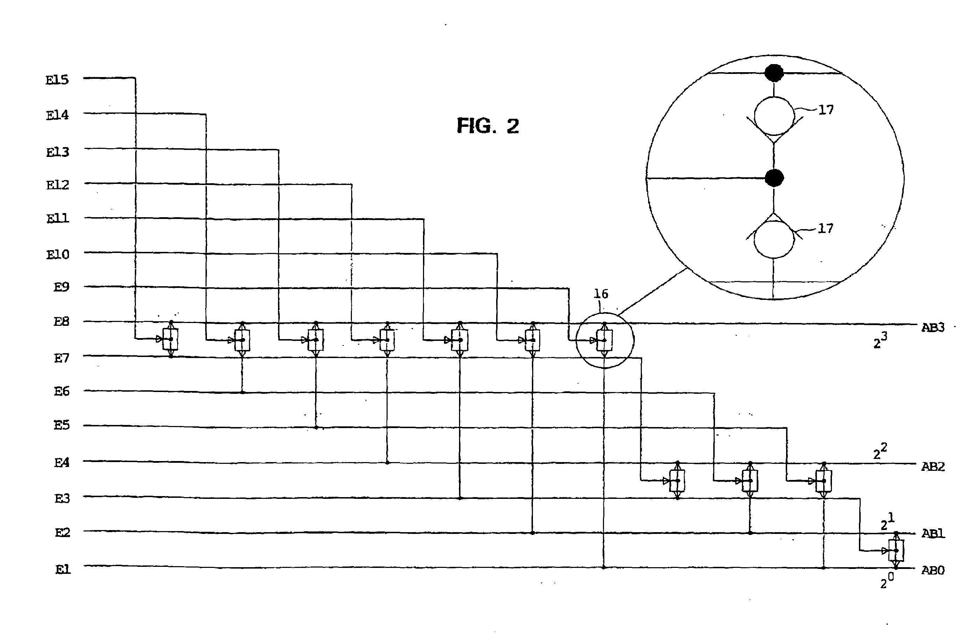

Die Steuereinrichtung gemäß Figur 1 kann immer dann vorteilhaft eingesetzt werden, wenn binär codierte Drucksignale eingangsseitig zur Verfügung stehen und ausgangsseitig Aktoren üblicher Bauweise einzeln anzusteuern sind. Liegen eingangsseitig Drucksignale numerischer Ordnung vor, so können diese mit Hilfe der in Figur 2 gezeigten Codiereinrichtung in binär codierte Signale umgewandelt werden.

Die in Figur 2 gezeigte Codiereinrichtung weist 15 mit E1-E15 bezeichnete Eingänge und 4 mit AB0-AB3 bezeichnete Ausgänge auf. Über jeweils eine durchgehende Verbindungsleitung sind Eingänge E1 mit AB0, E2 mit AB1, E4 mit AB2 und E8 mit AB3 verbunden. Entsprechend bezeichnet ein an den Ausgängen AB0-AB3 anliegendes Drucksignal den Zahlenwert des dazugehörigen Eingangs, also AB3 den Zahlenwert 8 = 2³, AB2 den Zahlenwert 4 = 2², AB1 den Zahlenwert 2 = 2¹ und AB0 den Zahlenwert 1 = 2⁰. Die übrigen Eingänge E3, E5-E7 und E9-E15 sind über eine Verzweigung 16, jeweils ein Rückschlagventil 17 und Verbindungsleitungen an zwei der Eingänge E1-E15 angeschlossen und zwar jeweils an die beiden Eingänge, deren summierter Zahlenwert der Nummer des angeschlossenen, vor der Verzweigung liegenden Eingangs entspricht. Ein an einem dieser Eingänge, z.B. dem Eingang E3 anstehendes Drucksignal wird also an jeweils zwei, drei oder vier der Ausgänge AB0-AB3, im Beispiel vom E3 die Ausgänge AB0 und AB1 übertragen. Mit der beschriebenen und über Rückschlagventile zur Eingangsseite hin jeweils gesperrten Verbindung der Eingänge untereinander wird durch Erzeugung von einem, zwei, drei oder vier Drucksignalen an den wiederum numerisch geordneten Ausgängen AB0-AB3 auf einfache Weise eine binäre Codierung der numerischen Zuordnung eines an einem der Eingänge E1-E15 anliegenden Drucksignals erreicht. Werden die Ausgänge AB0-AB3 der Codiereinrichtung gemäß Figur 2 mit den Steuerleitungen S0-S3 in gleicher numerischer Reihenfolge durch Übertragungsleitungen verbunden, so bewirkt die Eingabe eines Drucksignals mit dem Signalwert 1 an einem der Eingänge E1-E15 eine Steuerung der Wegeventile 1-15 derart, daß die Arbeitsluft von dem Eingang E zu demjenigen der Ausgänge A1-A15 gelangt, dessen Nummer mit der Nummer des angesteuerten Eingangs übereinstimmt.

Auch die Codiereinrichtung gemäß Figur 2 kann durch Hinzufügen weiterer Ausgänge und dementsprechend weiterer Eingänge beliebig erweitert werden. Wird ein weiterer Ausgang entsprechend dem Zahlenwert 2⁴ hinzugefügt, so kann die Codiereinrichtung um 16 Eingänge erweitert werden. Mit zwei weiteren Ausgängen erreicht man bereits 63 Eingänge.

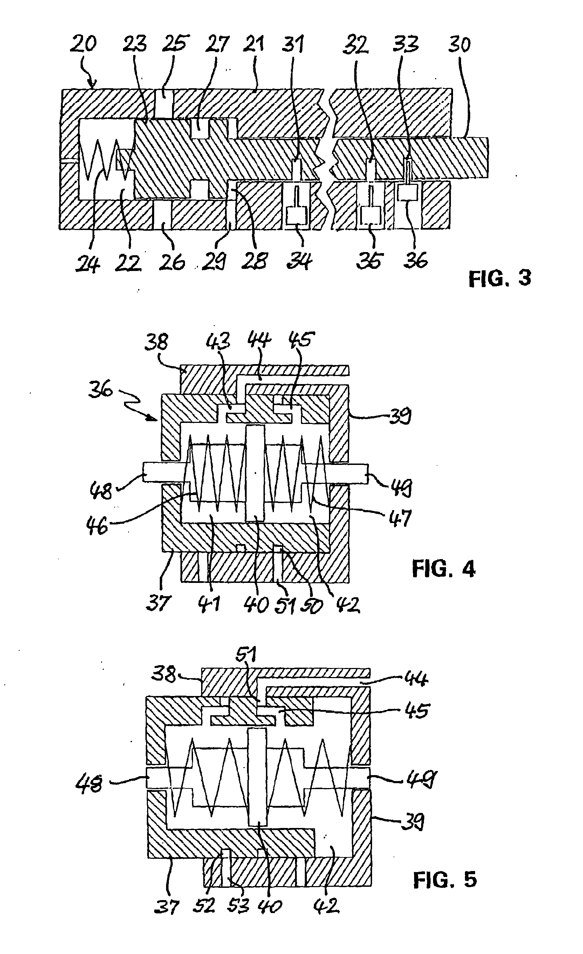

Figur 3 zeigt ein mit einem binär codierten Drucksignal pneumatisch ansteuerbares 2/2-Wegeventil 20, das unter anderem zur Steuerung des Farbwechsels in einer automatisch arbeitenden Lackieranlage eingesetzt werden kann. Das Wegeventil 20 weist ein Gehäuse 21 mit einer zylindrischen Ventilbohrung 22 auf, in dem ein Ventilkolben 23 gegen die Kraft einer Rückstellfeder 24 in Längsrichtung bewegbar angeordnet ist. In die Ventilbohrung 22 münden radial auf entgegengesetzten Seiten eine Eingangsbohrung 25 und eine Ausgangsbohrung 26, die durch den Ventilkolben 23 in seiner dargestellten Sperrstellung voneinander getrennt sind und durch eine in dem Ventilkolben 23 ausgebildete Ringnut 27 verbunden werden, wenn der Ventilkolben 23 nach links in eine Durchgangsstellung bewegt wird. Zum Bewegen des Ventilkolbens 23 ist in dem Gehäuse 21 eine Ringkammer 28 vorgesehen, die'über eine Anschlußbohrung 29 mit Arbeitsluft beaufschlagbar ist. An seinem der Rückstellfeder 24 entgegengesetzten Ende weist der Ventilkolben 23 einen Stößel 30 mit drei im Abstand voneinander angeordneten schlitzförmigen Ausnehmungen 31, 32, 33 auf. Den Ausnehmungen liegen im Gehäuse 21 Bohrungen gegenüber, in die pneumatisch betätigbare Sperren 34, 35, 36 eingesetzt sind. Die Sperren 34, 35 greifen in ihrer Grundstellung bei Atmosphärendruck nicht in die Ausnehmungen 31, 32 ein und werden durch Beaufschlagung mit einem höheren Druck in die Sperrstellung bewegt. Die Sperre 36 sperrt in ihrer Grundstellung bei Atmosphärendruck durch Eingreifen in die Ausnehmung 33 den Stößel 30 und wird durch Beaufschlagung mit einem höheren Druck in eine Stellung bewegt, in der sie den Stößel 30 freigibt.

Die Festlegung des binären Codes, bei welchem das Wegeventil 20 in seine Offenstellung steuerbar sein soll, erfolgt durch die Wahl der Sperren 34, 35, 36, denen über drei getrennte Übertragungsleitungen die binär codierten Drucksignale zugeführt werden. Je nachdem, welche Steuercharakteristik die einzelnen Sperren haben, werden für die Freigabe des Stößels 30 andere Signalzustände benötigt. Bei dem in Figur 3 dargestellten Beispiel wird der Stößel 30 nur freigegeben, wenn an den Sperren 34 und 35 der Signalwert 0 und an der Sperre 36 der Signalwert 1 anliegt. Nimmt man an, daß die an die Sperre 36 angeschlossene Übertragungsleitung dem binären Zahlenwert 2² zugeordnet ist, so würde also das Wegeventil 20 durch ein dem numerischen Eingang E4 zugeführtes Drucksignal freigeschaltet. Bei jedem anderen binären Drucksignal, das mit drei Leitungen übertragen werden kann, ist entweder an der Sperre 36 der Signalwert 0, die Sperre wird also nicht gelöst, oder der Signalwert 1 liegt gleichzeitig an der Sperre 36 und an einer oder beiden Sperren 34, 35 an, so daß gleichzeitig mit dem Lösen der Sperre 36 die Sperren 34 und/oder 35 schließen und den Stößel 30 festhalten. Mit der gezeigten Zahl von drei Sperren, können insgesamt acht voneinander abweichende Schaltzustände erreicht werden. Es können daher acht derartige Wegeventile angesteuert werden. Mit jeder Erhöhung der Zahl der Sperren an den Wegeventilen um 1 verdoppelt sich die Zahl der Wegeventile, die mit binär codierten Signalen über die gleichen Leitungen angesteuert werden können.

Figur 4 zeigt eine mögliche Ausgestaltung der Sperre 36. Die Sperre 36 besteht aus einem pneumatisch betätigbaren Hubzylinder mit einem aus zwei topfförmigen, teleskopartig ineinandergreifenden Teilen 37, 38 gebildeten Gehäuse 39 und einem in dem inneren Gehäuseteil 37 angeordneten Kolben 40, der den von dem Gehäuse 39 umschlossenen Hohlraum in zwei Kammern 41, 42 unterteilt. Die Kammer 41 ist über einen das Gehäuseteil 37 durchdringenden Verbindungskanal 43 an einen im Gehäuseteil 38 ausgebildeten Anschlußkanal 44 für die Zuführung von Arbeitsluft angeschlossen. Ein zweiter, das Gehäuseteil 37 durchdringender Verbindungskanal 45 ist über eine Ringnut 50 in der Mantelfläche des Gehäuseteils 38 mit einem Entlüftungskanal 51 verbunden. In den Kammern 41, 42 befinden sich Druckfedern 46, 47, die den Kolben 40 in einer Ruhestellung halten. An den beiden Stirnseiten des Kolbens 40 sind aus dem Gehäuse 39 herausragende Stifte 48, 49 angebracht. Der Stift 48 dient als Sperrstift, der dazu bestimmt ist in die Ausnehmung 33 des Stößels 30 einzugreifen. Beide Stifte 48, 49 eignen sich auch als Indikator für den Sperrentyp. Wird die Kammer 41 mit Druck beaufschlagt, so wird der Stift 48 in das Gehäuse zurückgezogen und gibt dadurch den Stößel 30 frei.

Figur 5 zeigt eine mögliche Ausgestaltung der Sperre 34, die mit der Sperre 35 übereinstimmt. Die Sperre 34 besteht aus Vereinfachungsgründen aus den gleichen Bauteilen wie die in Figur 4 gezeigte Sperre 36 und unterscheidet sich von dieser lediglich durch die Lage, in der die Gehäuseteile 37, 38 miteinander verbunden sind. Bei der Sperre 34 ragt das Gehäuseteil 37 nur soweit in das Gehäuseteil 38 hinein, daß die Länge des Gehäuses 39 gleich der Gesamtlänge der aus dem Kolben 40 und den Stiften 48, 49 gebildeten Einheit ist. Die Stifte 48, 49 ragen daher in der Grundstellung nicht aus dem Gehäuse 39 heraus. Der Anschlußkanal 44 ist bei dieser Ausführung mit dem Verbindungskanal 45 verbunden, so daß die Arbeitsluft der Kammer 42 zugeführt wird. Von dem Entlüftungskanal 51 ist die Kammer 42 getrennt und die Kammer 41 ist über eine Ringnut 52 an einen Entlüftungskanal 53 angeschlossen. Durch Druckbeaufschlagung der Kammer 42 über den Anschluß 44 kann der Stift 48 aus dem Gehäuse 39 herausgedrückt werden, um zum Sperren des Stößels 30 in die Ausnehmung 31 im Stößel 30 einzudringen.

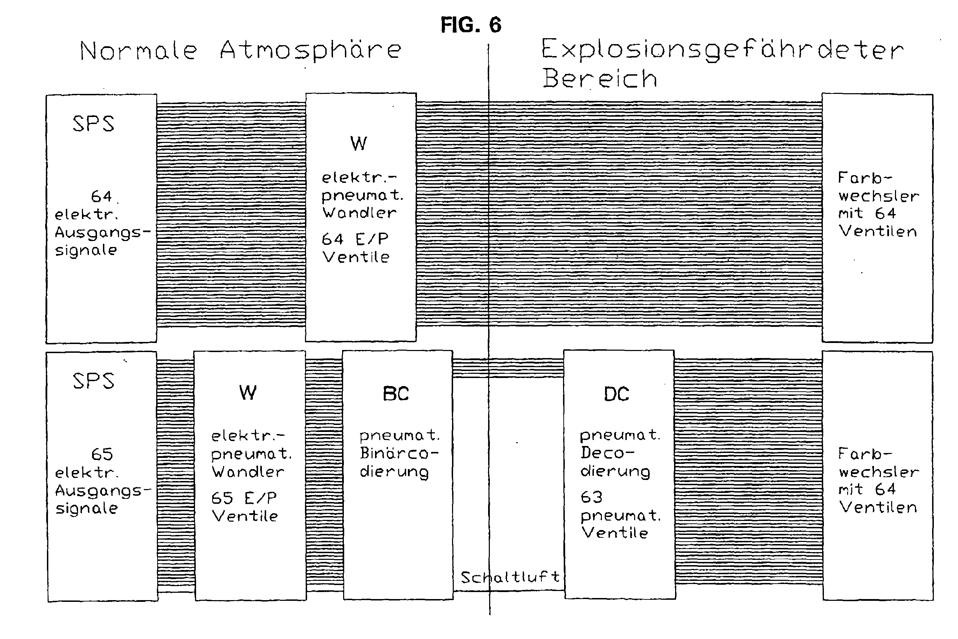

Figur 6 zeigt ein Anwendunggbeispiel für das erfindungsgemäße Verfahren und die beschriebenen Einrichtungen zu seiner Durchführung. In der oberen Hälfte von Figur 6 ist ein bekannter Aufbau einer elektropneumatischen Steuereinrichtung zur Steuerung der 64 Ventile eines Farbwechslers gezeigt. Eine elektronische Steuereinrichtung SPS zur Ausgabe von 64 elektrischen Ausgangssignalen ist über 64 elektrische Leitungen mit 64 Magnetventilen eines elektropneumatischen Wandlers W verbunden. Von den Wegeventilen führen 64 Schlauch- oder Rohrleitungen in einen explosionsgefährdeten Bereich, in dem sich ein Farbwechsler mit 64 Farbwechselventilen befindet, die jeweils an eine Leitung angeschlossen sind.

Die untere Hälfte von Figur 6 zeigt eine erfindungsgemäße Lösung für den gleichen Anwendungsfall. Außerhalb des explosionsgefährdeten Bereichs wird unmittelbar an den elektropneumatischen Wandler W eine pneumatische Binärcodiereinrichtung BC in der Ausführung gemäß Figur 2 angeschlossen. Von der Binärcodiereinrichtung BC führen sechs Übertragungsleitungen für binärcodierte Signale und parallel dazu eine Übertragungsleitung für Schaltluft zu einer in dem explosionsgefährdeten Bereich angeordneten pneumatischen Decodierungseinrichtung DC, in der in Figur 1 gezeigten auf 63 Ventile erweiterten Ausführung. Die Decodierungseinrichtung hat 64 Ausgänge an die jeweils ein Ventil des Farbwechslers angeschlossen ist. Durch die erfindungsgemäße Gestaltung der Signalübertragung werden auf der Übertragungsstrecke von dem normalen in den explosionsgefährdeten Bereich 57 Übertragungsleitungen eingespart. Hierdurch werden der Bauaufwand, der Montageaufwand und die Zeiten für Montage und Inbetriebnahme so erheblich reduziert, daß trotz der zusätzlichen Kosten für die Binärcodier- und Decodiereinrichtung ein deutlicher Kostenvorteil erreicht werden kann.

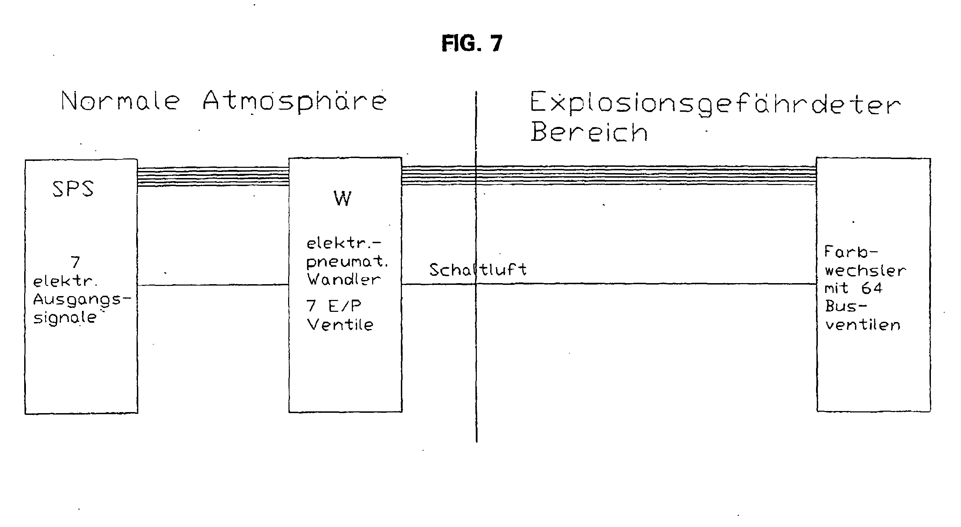

Eine weitere Vereinfachung und Verbilligung kann durch den Einsatz einer elektrischen Systemsteuerung SPS erreicht werden, die binär codierte elektrische Ausgangssignale zur Verfügung stellt. In diesem Fall kann, wie in Figur 7 gezeigt, der elektropneumatische Wandler auf einen Umfang von sieben Magnetventilen verkleinert werden und die pneumatische Binärcodiereinrichtung entfallen. Bei dem in Figur 7 gezeigten Anwendungsbeispiel wurde darüber hinaus die pneumatische Decodiereinrichtung durch die Verwendung von Farbwechselventilen entbehrlich, die wie das Ausführungsbeispiel gemäß Figur 3 mit einem binär codierten Drucksignal angesteuert werden können.

## Patentansprüche

1. Verfahren zur Fernsteuerung einer Mehrzahl von einzeln ansteuerbaren Aktoren durch Übertragung von den einzelnen Aktoren zugeordneten Drucksignalen mit Hilfe eines gasförmigen oder flüssigen Druckmittels in als Schlauch- oder Rohrleitungen ausgebildeten Übertragungsleitungen, **dadurch gekennzeichnet, daß** die Drucksignale den einzelnen Aktoren numerisch zugeordnet werden und ihre Zuordnung in binär codierter Form übertragen wird, indem je nach Ordnungszahl eines angesteuerten Aktors gleichzeitig zwei oder mehrere Übertragungsleitungen die numerische Zuordnung und die Steuerung des Aktors bestimmende Drucksignale übertragen und daß den Aktoren eine Steuereinrichtung als Decodiereinrichtung zugeordnet ist, die die ankommenden, binär codierten Drucksignale entschlüsselt und die steuernden Drucksignale dem angesteuerten Aktor zuleitet.

2. Steuereinrichtung für gasförmige oder flüssige Druckmittel mit wenigstens zwei zwischen einem Eingang und mehreren Ausgängen angeordneten Gruppen von druckgesteuerten Ventilen, die zwei Schaltstellungen einnehmen können und in jeder der beiden möglichen Schaltstellungen einen anderen von zwei Ventilausgängen mit einem Ventileingang verbinden, **dadurch gekennzeichnet, daß** die ventilausgänge der Ventile einer ersten Gruppe jeweils an einen Ventileingang eines gesonderten Ventils einer zweiten Gruppe von Ventilen angeschlossen sind, die Ventile jeder Gruppe jeweils über eine gemeinsame Steuerleitung zur Übertragung von Drucksignalen ansteuerbar sind und die Steuerleitung der einzelnen Gruppen voneinander getrennt sind.

3. Steuereinrichtung nach Anspruch 2, **dadurch gekennzeichnet, daß** den Steuerleitungen ein Wandler vorgeschaltet ist, der binär codierte elektrische Ausgangssignale in entsprechende pneumatische oder hydraulische Signale umwandelt.

4. Steuereinrichtung nach Anspruch 3, **dadurch gekennzeichnet, daß** der Wandler aus mehreren elektromagnetisch betätigbaren Wegeventilen gebildet ist, die unabhängig voneinander ansteuerbar sind und jeweils eine Steuerleitung mit einer Druckquelle oder einem unter Atmosphärendruck stehenden Raum verbinden.

5. Steuereinrichtung nach einem der Ansprüche 2 bis 4, **dadurch gekennzeichnet, daß** den Steuerleitungen der Steuereinrichtung eine Binärcodiereinrichtung für gasförmige oder flüssige Druckmittel vorgeschaltet ist, die eine Anzahl numerisch geordneten Signaleingängen aufgegebene Drucksignale in binär codierte Drucksignale an mit den Steuerleitungen verbundenen Ausgängen umwandelt.

6. Steuereinrichtung nach einem der Ansprüche 2 bis 5, **dadurch gekennzeichnet, daß** die Binärcodiereinrichtung eine numerisch geordnete Zahl von Signaleingängen aufweist, von denen die Signaleingänge, deren Ordnungszahl 1 oder eine ganzzahlige Potenz der Basis 2 ist, jeweils durch eine Verbindungsleitung mit einem Signalausgang verbunden sind und daß die übrigen Signaleingänge jeweils über ein Rückschlagventil an diejenigen der Verbindungsleitungen angeschlossen sind, deren Ordnungszahlen in der Summe die Ordnungszahl des jeweils angeschlossenen Signaleingangs ergeben.

7. Steuereinrichtung nach einem der Ansprüche 2 bis 6, **dadurch gekennzeichnet, daß** in die Aktoren eine Einrichtung zur Decodierung des binären, die Zuordnung bestimmenden Drucksignals integriert ist.

8. Steuereinrichtung nach Anspruch 7, **dadurch gekennzeichnet, daß** mindestens ein Aktor eine durch Beaufschlagung mit einem gasförmigen oder flüssigen Druckmittel bewegbare Wand aufweist, die eine an eine Übertragungsleitung zur Fernsteuerung anschließbare Kammer begrenzt, wobei die bewegbare Wand durch zwei oder mehrere Sperren in einer Stellung festhaltbar ist und die Sperren unabhängig voneinander durch Beaufschlagung mit einem Druckmittel in eine Sperrstellung, in der sie die bewegbare Wand festhalten, oder in eine Lösestellung steuerbar sind, in der sie die bewegbare Wand freigeben.

9. Steuereinrichtung nach Anspruch 8, **dadurch gekennzeichnet, daß** der Aktor zwei unterschiedlich ausgelegte Sperren hat, eine Sperre, die bei Druck die Sperrstellung und eine Sperre, die Lösestellung einnimmt.

10. Steuereinrichtung nach einem der Ansprüche 8 oder 9, **dadurch gekennzeichnet, daß** die bewegbare Wand einen in einem Gehäuse längsverschieblichen Stößel aufweist, der im Abstand voneinander mehrere Ausnehmungen hat, in die in einer Stellung des Stößels quer zur Längsachse des Stößels bewegbare Sperrstifte einsteckbar sind.

11. Steuereinrichtung nach einem der Ansprüche 8 bis 10, **dadurch gekennzeichnet, daß** die Sperre aus einem Hubzylinder mit einem Gehäuse und einem gegen die Kraft einer Rückstellfeder in diesem bewegbar angeordneten Kolben besteht, der einen in einer Betriebsstellung des Kolbens aus dem Hubzylinder herausragenden Sperrstift trägt.

12. Steuereinrichtung nach Anspruch 11, **dadurch gekennzeichnet, daß** das Gehäuse des Hubzylinders aus zwei teleskopartig ineinander steckbaren Gehäuseteilen gebildet ist, wobei das innere Gehäuseteil die Zylinderbohrung für den Kolben bildet und zwei Verbindungskanäle aufweist, die im Abstand voneinander die Wand des inneren Gehäuseteils radial durchdringen und daß das äußere Gehäuseteil in zwei unterschiedlichen Stellungen mit dem inneren Gehäuseteil verbindbar ist und einen Anschlußkanal hat, der in jeder der beiden Stellungen mit einem anderen der Verbindungkanäle verbunden ist.
